(19) Europäisches Patentamt
European Patent Office
Office européen des brevets

(11) EP 3 628 700 B1

(12) EUROPÄISCHE PATENTSCHRIFT

(45) Veröffentlichungstag und Bekanntmachung des Hinweises auf die Patenterteilung:
**01.06.2022 Patentblatt 2022/22**

(21) Anmeldenummer: **18197270.4**

(22) Anmeldetag: **27.09.2018**

(51) Internationale Patentklassifikation (IPC):
***C08G 77/04** (2006.01)* ***C08G 77/08** (2006.01)*
***C08G 77/14** (2006.01)*

(52) Gemeinsame Patentklassifikation (CPC):
**C08G 77/14; C08G 77/045; C08G 77/08**

# (54) 3-GLYCIDYLOXYPROPYLALKOXYSILANOLIGOMERE-ENTHALTENDE ZUSAMMENSETZUNG, VERFAHREN ZU DEREN HERSTELLUNG UND DEREN VERWENDUNG

3-GLYCIDYLOXYPROPYLALKOXYSILANE OLIGOMER-CONTAINING COMPOSITION, METHOD FOR THEIR PREPARATION AND THEIR USE

COMPOSITION CONTENANT DES 3-GLYCIDYLOXYPROPYL-ALCOXYSILAN-OLIGOMÈRES, SON PROCÉDÉ DE PRODUCTION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.04.2020 Patentblatt 2020/14**

(73) Patentinhaber: **Evonik Operations GmbH**
**45128 Essen (DE)**

(72) Erfinder:
- **ALBERT, Dr., Phillip**
  **79618 Rheinfelden (DE)**
- **KIRBERG, Julia**
  **79618 Rheinfelden (DE)**
- **BRINGMANN, Dennis**
  **79588 Efringen-Kirchen (DE)**
- **HITZLER, Dominik**
  **73566 Bartholomä (DE)**
- **JUST, Eckhard**
  **79618 Rheinfelden (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 1 896 522** **CN-A- 106 674 521**
**US-A- 5 650 474**

EP 3 628 700 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft eine Zusammensetzung, die ein Gemisch aus 3-Glycidyloxypropylalkoxysilanoligomeren, insbesondere aus Glycidyloxypropylmethoxysilanoligomeren, mit einem Anteil von ≥ 60 Gew.%, bezogen auf die Summe aller Komponenten in der Zusammensetzung, umfasst, die lagerstabil über mindestens vier Wochen ist, eine Farbzahl von ≤ 20 mg Pt-Co/l, einen pH von größer gleich 3,5 bis kleiner gleich 6,5 und einen Monomeranteil an bei der Herstellung der Zusammensetzung eingesetztem Silan von kleiner gleich 5 Mol-%, bezogen auf den molaren Anteil an Si in der Zusammensetzung, aufweist, wobei der Anteil an Epoxy-Gruppen, die in Si-Verbindungen gebunden sind und in der Zusammensetzung vorliegen, größer gleich 95 Mol-%, bezogen auf den molaren Anteil an Si in der Zusammensetzung, beträgt. Ferner betrifft die Erfindung ein besonderes Verfahren zur Herstellung einer erfindungsgemäßen Zusammensetzung sowie deren Verwendung.

3-Glycidyloxypropyltrimethoxysilan (Dynasylan® GLYMO) und 3-Glycidyloxypropyltriethoxysilan (Dynasylan® GLYEO) sind Silane, die in vielen industriellen Anwendungen zum Einsatz kommen. Sie können als Additive in Lack- und Klebstoffformulierungen z.B. als Haftvermittler eingesetzt werden, um die Haftung zu anorganischen Substraten zu verbessern. Silane wie GLYMO und GLYEO können in lösungsmittelfreien, lösungsmittelhaltigen und auch in wässrigen Formulierungen eingesetzt werden. Interessante Effekte können dabei in wässrigen Acrylatpolymerdispersionen gefunden werden. Hier kann durch den Zusatz von Epoxysilanen nicht nur die Haftung der applizierten Beschichtung zum Substrat verbessert werden, sondern auch die Wasseraufnahme verringert und die Abriebfestigkeit verbessert werden. Die Stabilität von wässrigen Polymerdispersionen, die mit Silanen bzw. Epoxysilanen addtiviert werden, sind jedoch begrenzt. Wasser kann zum einen das Silan hydrolysieren und die reaktiven Silanolgruppen freisetzen. Dadurch kann eine Vernetzung über die Silanolgruppen stattfinden und die Viskosität erhöht werden bzw. eine Gelierung stattfinden. Aber auch die Epoxygruppe des Silans kann in der wässrigen Formulierung hydrolysieren und kann dann nicht mehr mit funktionellen Gruppen am Polymer reagieren. Härter von 2K PU-Lacken werden oft mit GLYMO additiviert, um die Haftung auf anorganischen Substraten zu verbessern. Epoxysilane werden auch in Lack- und Klebstoffformulierungen eingesetzt, die einen direkten oder indirekten Lebensmittelkontakt haben. GLYMO wird in diesen Anwendungen wegen der toxischen Einstufung immer mehr in Frage gestellt. Der Vorteil von GLYMO-Oligomeren gegenüber GLYMO dürfte auf den ersten Blick in einer verringerten Toxizität, einem geringeren VOC-Gehalt bei der Hydrolyse und einem höheren Siedepunkt liegen. Daher sollte der Monomeranteil im GLYMO-Oligomer möglichst gering sein.

US 5650474 beschreibt Kondensate und Cokondensate aus Silanen, die ungesättigte Alkyl-, Epoxy-, Methacryl-, Acryl-, Amino-, Hydroxy-, Ether-, Ester- und Phosphorgruppen enthalten. Bei den betreffenden Herstellverfahren werden als Kondensationskatalysator u.a. Fluorid, wie Kaliumfluorid eingesetzt. So ist aus Beispiel 19 ein GLYMO-Homo-kondensats zu entnehmen, das nach der Aufarbeitung einen Monomergehalt von 7,1 Mol-% und eine gelbe Farbe aufweist. Ferner ist US 5650474 zu entnehmen, dass saure und basische Katalysatoren zu geringen Umsätzen führen und die Epoxygruppen mit diesen Katalysatoren geöffnet werden können. Die in US 5650474 angeführten Vergleichsbeispiele 6 und 7 wurden sauer katalysiert und zeigen einen sehr geringen Umsatz bei der Kondensation sowie eine Ringöffnung der Epoxygruppen.

In EP 3235845 wird die Herstellung und Anwendung von Epoxysilan-Oligomeren und Cooligomeren beansprucht. Als Katalysatoren werden dabei neutrale Salze angegeben.

In CN 106674521 wird ein Verfahren zur Herstellung von einem Epoxysilan-Oligomer beansprucht. Als Lösungsmittel wird tert.-Butanol eingesetzt. Der Katalysator wird im Hydrolysewasser gelöst zugegeben. Als Katalysatoren werden unter anderem NaCl oder $Na_2CO_3$ angegeben. Mit diesem Verfahren kann allerdings kein farbloses Oligomer hergestellt werden.

In "Contemporary Topics in Polymer Science", Volume 4, 1984, Seite 107, wird die Herstellung eines GLYMO-Oligomers beschrieben. Es werden auf 30 mmol Si (GLYMO) 0,5 bis 5 ml konzentrierte HCl als Katalysator eingesetzt.

EP 2794788 beansprucht eine Polysiloxanoligomerzusammensetzung, die vollsständig hydrolysiert ist und keine Alkoxygruppen, sondern nur Silanol-Gruppen enthält. Als Monomere werden Epoxymethyldialkoxysilane eingesetzt. Die Oligomeren haben ein zahlenmittleres Molekulargewicht von 500 bis 700 g/mol.

In US 6008285 wird ein Prozess zur Herstellung einer Zusammensetzung beschrieben. Komponenten für die beschriebene Zusammensetzung sind Silane, die Epoxygruppe enthalten, als Katalysator wird Aluminium- oder Zirkon-Alkoholat verwendet. Ferner enthalten solche Zusammensetzungen Partikel sowie aromatische Polyole. Diese Zusammensetzungen werden u.a. für Beschichtungen als Korrosionsschutz eingesetzt.

In US 6391999 werden Kondensate aus Epoxysilanen sowie Kokondensate aus Epoxysilanen bzw. anderen funktionellen Silanen beansprucht. Als Katalysator für die Hydrolyse und Kondensationsreaktion wird ein Ionenaustauscherharz mit quarternären Ammonium-Ionen eingesetzt. Die hergestellten Oligomere haben ein Molekulargewicht zwischen 3000 und 10.000 g/mol.

US 2004/0234789 betrifft ein Substrat mit einer Beschichtung, wobei die Beschichtung aus einem hydrolysierten epoxyfunktionellen Silan, einem kationischen Photoinitiator, einem ungesättigten Monomer mit radikalischen Photokatalysator sowie einem nichthydrolysierten epoxyfuktionellen Silan besteht.

EP 2428530 beansprucht einen Prozess zur Herstellung von einem Epoxysilan-Oligomer, das auf einem Epoxydialkoxysilan basiert. In Anspruch 2 wird explizit 3-Gylcidyloxypropylmethyldiethoxysilan genannt. Weiter wird in EP 2428530 eine wasserbasierte Beschichtungsformulierung mit partikulären Metallen und Additiven beschrieben.

EP 1971658 beschreibt den Prozess zur Herstellung einer Beschichtungszusammensetzung auf Wasserbasis, die ein Epoxysilan-Oligomer mit einer Viskosität von 7 bis 86 mPas sowie partikuläre Metalle, Additive und Vernetzer enthält.

EP 1896522 offenbart einen Prozess zur Herstellung eines Epoxysilanoligomers mit einer Viskosität von 7 bis 86 mPas. Der Prozess wird in Anwesenheit eines alkoholfreien Lösungsmittels geführt. Darüber hinaus wird eine Wasserlack-zusammensetzung beansprucht, die aus dem Epoxysilan-Oligomer, einem partikulären Metall sowie weiteren Additiven und Wasser besteht.

DE 102007040246 beschreibt die Zusammensetzung einer strahlenhärtbaren Formulierung, die im ausgehärteten Zustand einen guten Korrosionsschutz für metallische Substrate bieten soll. Neben der Zusammensetzung wird auch die Herstellung einer Komponente beschrieben, die aus einem oligomeren Epoxysilans besteht. Das oligomere Epoxysilan wird aus einem Epoxysilan in Anwesenheit von Borsäure hergestellt.

Der vorliegenden Erfindung lag daher die Aufgabe zugrunde, ausgehend von einem 3-Glycidyloxypropyltrialkoxysilan ein möglichst einfaches, umweltfreundliches und wirtschaftliches Verfahren zur Verfügung zu stellen, das stabile sowie farblose oligomere Epoxypropylalkoxysilane als Gemisch in Form einer Zusammensetzung mit geringen Restmonomergehalt zur Verfügung stellt [nachfolgend auch kurz als Wirkstoff oder oligomere Epoxysilane oder Epoxysilanoligomer(e) oder Epoxysilanoligomer(e) enthaltende Zusammensetzung genannt]. Stabil heißt, dass in einer solchen Epoxysilanoligomer enthaltenden Zusammensetzung keine weitere Kondensation aufgrund von freien Silanolgruppen stattfinden kann. Stabil heißt aber auch, dass die Epoxygruppen im Epoxysilanoligomer keine Ringöffnung durch freie Silanolgruppen, Wasser oder Alkoholspuren mit oder ohne vorhandenen Katalysatoren erfahren. Ferner sollten solche Epoxysilanoligomere frei von Bor bzw. Borsäure sein und an Halogen, insbesondere Fluor/-id sowie Chlor/-id bestenfalls nur einen möglichst geringen Gehalt aufweisen, da Halogen/-id bei Applikation die Korrosion von metallischen Substraten befördern kann.

Die gestellt Aufgabe wird erfindungsgemäß entsprechend den Merkmalen in den hier vorliegenden Ansprüchen vorteilhaft gelöst.

Überraschenderweise wurde gefunden, das farblose und stabile oligomere Epoxysilane mit geringem Monomergehalt durch ein spezielles Verfahren mit speziellen Katalysatoren hergestellt werden können. Zunächst wird ein schwach alkalischer Katalysator zur Hydrolyse und Kondensation eingesetzt. Dadurch kann der Monomergehalt auf sehr geringe Mengen reduziert werden. Darüber hinaus bleiben die Epoxygruppen intakt und werden nicht durch den Katalysator, das Wasser oder den freigesetzten Alkohol geöffnet. Nach der Hydrolyse und Kondensation wird der pH-Wert der Reaktionsmischung mit einer Säure/Säurereagenz von leicht alkalisch auf einen leicht sauren pH-Wert eingestellt. Durch diese pH-Wert Änderung kann die Verfärbung des Oligomers verhindert werden. Wenn die Hydrolyse und Kondensation ausschließlich bei einem sauren pH-Wert durchgeführt wird, enthält das dabei entstandene Oligomer Silanolgruppen und noch sehr viele Monomere. Sollte der pH-Wert sehr sauer eingestellt werden, dann findet eine Ringöffnung der Epoxygruppe statt. Wenn die Hydrolyse und Kondensation bei ausschließlich mildem alkalischen pH-Wert durchgeführt wird, können geringe Monomergehalte erzielt werden, das Endprodukt ist jedoch stark gelb oder orange gefärbt. Das Produkt kann durch die Verfärbung in farbempfindlichen Formulierungen und Anwendungen nicht mehr eingesetzt werden. Ein geringer Monomergehalt hat auch toxikologische Vorteile, weil höhermolekulare Epoxyverbindungen als weniger toxisch eingestuft werden bzw. überhaupt nicht eingestuft werden müssen. Darüber hinaus ergeben sich aus Epoxysilan-Oligomeren mit geringem Monomergehalt weitere Vorteile in industriellen Anwendungen. Wenn in einem Vergleichsversuch z. B. GLYMO, ein Epoxysilan-Oligomer mit hohem Monomergehalt sowie die Erfindungsgemäßen farblosen Oligomeren mit gerigem Monomergehalt in wässrigen Acrylatpolymerdispersionen eingesetzt werden, kann mit den erfindungsgemäßen Oligomeren eine wesentlich bessere Lagerstabilität erzielt werden.

Die farblosen oligomeren Epoxysilane können Vorteilhaft als Additive oder Cobindemittel sowohl in farbsensitiven Formulierungen für Beschichtungen als auch in Klebe- und Dichtmassen eingesetzt werden.

Darüber hinaus sind erfindungsgemäße Zusammensetzungen im Wesentlichen farblose, gießfähige Flüssigkeiten und hervorragend lagerstabil.

Vom Patentgegenstand ausgenommen sind Anteile in der Zusammensetzung an Bor, beispielsweise in Form von Borsäure sowie Fluorid sowie Chloride in Form seiner Salze. So weist eine erfindungsgemäße Zusammensetzung nur Geringe Anteile an Fluor/-id und/oder Chlor/-rid von kleiner gleich 100 Gew.-ppm, bezogen auf die Summe aller Komponenten in der Zusammensetzung, auf.

Erfindungsgemäße Zusammensetzungen zeichnen sich ferner als VOC-frei aus, so wird unter VOC-frei in der vorliegenden Anmeldung verstanden, dass eine erfindungsgemäße Zusammensetzung insbesondere kleiner gleich 1 Gew.-% an freiem Alkohol enthält, wobei die Gew.-%-Angabe auf die Zusammensetzung bezogen und der Alkohol aus der Reihe Methanol und Ethanol ausgewählt ist. Darüber hinaus ist eine erfindungsgemäße Zusammensetzung im Wesentlichen frei von organischen Lösemitteln, besonders alkoholischer Anteile, insbesondere von Methanol, Ethanol,

Propanol oder Butanol von mehr als 5 Gew.-%, ganz besonders von mehr als 0,3 Gew.-%, bezogen auf Gehalt an Wirkstoff in der Zusammensetzung.

Beispielsweise -aber nicht ausschließlich- kann eine erfindungsgemäße Zusammensetzung als Wirkstoff ein Gemisch aus 3-Glycidyloxypropylalkoxy-silanoligomeren im Sinne der idealisierten allgemeinen Formel I

$$Y\text{-}Si(OR)_2O_{1/2}[Y\text{-}Si(OR)O_{2/2}]_n[Y\text{-}SiO_{3/2}]_m(Y\text{-})Si(OR)_2O_{1/2} \qquad (I)$$

enthalten, wobei n≥0 und m≥0 sind, Gruppen Y für Gycidyloxypropyl- und die Gruppe R beispielsweise für Methyl, Ethyl sowie ggf. partiell für H, vorzugsweise Methyl stehen können.

Gegenstand der vorliegenden Erfindung ist eine Zusammensetzung, die ein Gemisch aus 3-Glycidyloxypropylalkoxysilanoligomeren, vorzugsweise 3-Glycidyloxypropylmethoxysilanoligomeren mit einem Anteil von ≥ 60 Gew.%, bezogen auf die Zusammensetzung, umfasst, die lagerstabil über mindestens 8 Wochen bei 60 °C Lagertemperatur ist, eine Farbzahl von ≤ 20 mg Pt-Co/l, einen pH von größer gleich 3,5 bis kleiner gleich 6,5 und einen Monomeranteil an bei der Herstellung der Zusammensetzung eingesetztem Silan von kleiner gleich 5 Mol-%, bezogen auf den molaren Anteil an Si in der Zusammensetzung, aufweist, wobei der Anteil an Epoxy-Gruppen, die in Si-Verbindungen gebunden sind und in der Zusammensetzung vorliegen, größer gleich 95 Mol-%, bezogen auf den molaren Anteil an Si in der Zusammensetzung, beträgt.

Darüber hinaus zeichnen sich erfindungsgemäße Zusammensetzungen als vorteilhaft aus, die eine Viskosität von 600 bis 2000 mPa·s, einen Gehalt an Methanol von weniger als 0,5 Gew.-%, vorzugsweise kleiner gleich 0,3 Gew.-%, bezogen auf die Zusammensetzung, ein Molekulargewicht (Mn) von 600 bis 2000 g/mol aufweisen und frei von organischen Lösemittel sind, ausgenommen Methanol oder Ethanol.

Als besonders vorteilhaft zeichnen sich erfindungsgemäße Zusammensetzungen aus, wenn sie einen Anteil an an 3-Glycidyloxypropylalkoxysilanoligomeren bzw. 3-Glycidyloxypropylmethoxysilanoligomeren, d.h. Wirkstoffanteil, von ≥ 90 bis 99,9 Gew.-%, insbesondere ≥ 95 bis ≤ 99,7 Gew.-%, bezogen auf die Summe aller Komponenten in der Zusammensetzung, enthalten.

Ferner kann man eine erfindungsgemäße Zusammensetzung vorteilhaft mit einem Gehalt eines Zusatzes zur Verbesserung der Mischbarkeit bzw. Löslichkeit mit Wasser von < 40 Gew.-%, vorzugsweise > 0,1 bis ≤ 39,5 Gew.-%, bezogen auf alle Komponenten in der Zusammensetzung, ausstatten, wobei man bevorzugt Polyethylenglycolmonomethylether oder Propylenglykolmonomethylether verwendet. Die Methoxygruppe wird dabei vorteilhaft durch den Polyetheralkohol ausgetauscht.

Ebenfalls ist Gegenstand der vorliegenden Erfindung ein Verfahren zur Herstellung einer erfindungsgemäßen Zusammensetzung,
indem man

- in Schritt 1 3-Glycidyloxypropyltrimethoxysilan oder ein Gemisch aus 3-Glycidyloxypropyltrimethoxysilan und einem C1- bis C8-Alkyltrimethoxysilan einsetzt und in Gegenwart von Natriumhydrogencarbonat mit einer definierten Menge Wasser zusammenbringt und mischt, wobei man optional Methanol als Verdünnungsmittel zusetzen kann,
- in Schritt 2 das Reaktionsgemisch aufheizt und bei 55 bis 90 °C über 1,5 bis 5 Stunden und unter Durchmischung reagieren lässt, anschließend senkt man die Temperatur um 5 bis 10°C ab und stellt den pH Wert unter Zusatz einer definierten Menge an Säureäquivalente, vorzugsweise durch Zusatz eines festen, aciden Ionenaustauschers, auf größer gleich 3,5 bis kleiner gleich 6,5, vorzugsweise auf größer gleich 4 bis kleiner gleich 6, insbesondere größer gleich 4,5 und kleiner gleich 6, ein,
- nachfolgend führt man in Schritt 3 eine destillative Ausarbeitung des Produktgemischs aus Schritt 2 unter vermindertem Druck durch, lässt optional das Sumpfprodukt nach Abtrennung des freien Methanols unter Durchmischung bei 100 bis 150°C und einem Druck von ≤ 10 mbar über 0,5 bis 1,5 Stunden nachreagieren, anschließend wird das so im Sumpf der Destillationseinheit erhaltene Produkt filtriert.

Dabei setzt man in Schritt 1 vorteilhaft Methoxysilan(e) und Wasser in einem molaren Verhältnis von 1 zu 0,8 bis 1,3, bevorzugt von 1 zu 0,9 bis 1,25, besonders bevorzugt von 1 zu 1,0 bis 1,2 ein.

Darüber hinaus kann man beim erfindungsgemäßen Verfahren in Schritt 1 als Katalysator vorteilhaft Natriumhydrogencarbonat in einem molaren Verhältnis zu eingesetztem Methoxysilan oder Ethoxysilan von 0,0001 bis 0,06 zu 1, bevorzugt 0,0002 bis 0,03 zu 1, besonders bevorzugt 0,0003 bis 0,01 zu 1, insbesondere 0,0004 bis 0,008 zu 1 einsetzen.

Ferner kann man beim erfindungsgemäßen Verfahren neben dem 3-Glycidyloxypropyltrimethoxysilan ein Methoxysilan aus der Reihe Methyltrimethoxysilan oder Propyltrimethoxysilan einsetzen, wobei man vorteilhaft entsprechende Epoxysilan-Oligomer-Cokondensate erhält.

Im Allgemeinen führt man das erfindungsgemäße Verfahren wie folgt aus:
Das Verfahren kann man in einer beheizbaren/kühlbaren Rührapparatur mit Rückflusskühler, Dosiereinheit, Maßnahme

zur Schutzgasabdeckung sowie ein an die Reaktionsapparatur angeschlossenen Vakuumdestillationseinheit und Filtrationsvorrichtung durchführen.

In Schritt 1 des Verfahrens kann man zunächst 3-Glycidyloxypropyltrimethoxysilan oder ein Gemisch aus 3-Glycidyloxypropyltrimethoxysilan und einem C1-bis C8-Alkyltrimethoxysilan einsetzen. Das Gemisch in der Vorlage bringt man mit Natriumhydrogencarbonat und einer definierten Menge Wasser zusammen und mischt, wobei man optional Methanol als Verdünnungsmittel zusetzen kann. Weiter heizt man in Schritt 2 das so vorgelegt Reaktionsgemisch auf und lässt bei 55 bis 90 °C über 1,5 bis 5 Stunden unter Durchmischung reagieren. Anschließend senkt man die Temperatur um 5 bis 10°C ab und stellt den pH Wert im vorliegenden Reaktionsgemisch unter Zusatz einer definierten Menge an Säureäquivalente, vorzugsweise durch Zusatz eines festen, aciden Ionenaustauschers, auf größer gleich 3,5 bis kleiner gleich 6,5, vorzugsweise auf größer gleich 4 bis kleiner gleich 6, insbesondere größer gleich 4,5 und kleiner gleich 6, ein. Nachfolgend erfolgt in Schritt 3 eine destillative Ausarbeitung des vorliegenden Produktgemischs unter vermindertem Druck und Temperaturkontrolle, d.h. im Produktgemisch vorliegendes Methanol wird dabei im Wesentlichen abgetrennt. Anschließend kann man optional zur Vervollständigung der Reaktion das Sumpfprodukt nach Abtrennung des freien Methanols unter Durchmischung bei 100 bis 150°C und einem Druck von $\leq$ 10 mbar über 0,5 bis 1,5 Stunden nachreagieren lassen. Anschließend wird das so im Sumpf der Destillationseinheit erhaltene Produkt filtriert.

So erhält man vorteilhaft eine klare, leicht viskose und im Wesentlichen farblose Flüssigkeit, die einen vergleichsweise hohen Wirkstoffanteil aufweist, frei an organischem Lösemittel und über mehr als 4 Wochen, insbesondere über $\geq$ 8 Wochen lagerstabil ist, wobei der Gehalt an monomerem Edukt in der so erhaltenen Epoxysilanoligomere enthaltenden Zusammensetzung kleiner gleich 5 Mol-%, bezogen auf den molaren Anteil an Si in der Zusammensetzung, beträgt und der pH-Wert bei größer gleich 3,5 bis kleiner gleich 6,5 liegt.

Somit ist auch Gegenstand der vorliegenden Erfindung eine Zusammensetzung, die vorteilhaft nach dem erfindungsgemäßen Verfahren erhältlich ist.

Weiter ist Gegenstand der vorliegenden Erfindung die Verwendung einer erfindungs-gemäßen Zusammensetzung bzw. hergestellt nach dem erfindungsgemäßen Verfahren bzw. nach dem erfindungsgemäßen Verfahren erhältlich ist als Komponente in Epoxyharzformulierungen, als Kopplungsreagenz in Primerlösungen, als Versiegler auf anorganischen Substraten bzw. Substratoberflächen, als reaktives Bindemittel, als Co-Bindemittel, als Additiv in Polymerdispersionen sowie als Additiv in PU-Lacken, wobei eine erfindungsgemäße Zusammensetzung beispielweise in der Isocyanatkomponente vorteilhaft eingesetzt werden kann.

Die vorliegende Erfindung wird durch die nachfolgenden Beispiele näher erläutert, ohne den Gegenstand der Erfindung zu beschränken:

## Beispiele:

### Analytische Messungen

### NMR-Messungen:

Instrument: Bruker
Frequenz: 400 MHz ($^1$H-NMR); 80 MHz ($^{29}$Si-NMR)
Scans: 64 ($^1$H-NMR); 500 ($^{29}$Si-NMR)
Temperatur: 294,2 K
Lösungsmittel: $CDCl_3$
Standard: Tetramethylsilan

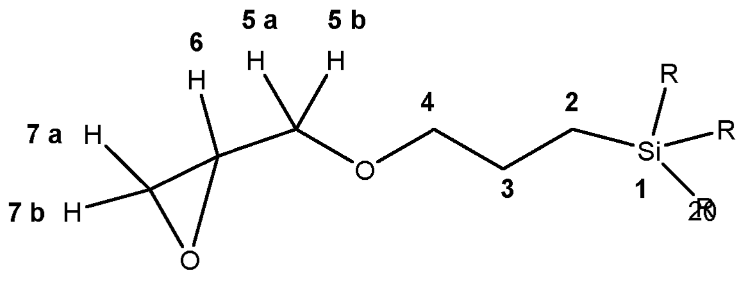

$^1$H-NMR: (400 MHz, $CDCl_3$) $\delta$= [ppm] = 0,65 (m, 2H, H-2); 1,65 (m, 2H, H-3); 2,60 (m, 1H, H-7 a*); 2,82 (m, 1H, H-7 b*); 3,20 (m, 1H, H-6); 3,35 (m, 1H, H-5 a**);3,50 (m, 4H, H-4); 3,4 - 3,9 (s, - OC$H_3$); 3,75 (m, 1H, H-5 b**).

Die allgemeine Schreibweise der Positionen wird als H-1 bis H-7 dargestellt.

War eine Eindeutige Zuordnung der Signale nicht möglich, sind die zugewiesenen Atome mit einem Stern (*) gekennzeichnet und können untereinander vertauscht werden.

Das Signal bei 0,65 (H-2) wird als Referenz für die Summe aller eingesetzten Epoxysilane verwendet (Korrektur um Faktor 0,5, da sich 2 Protonen am Kohlenstoffatom befinden). Das Signal bei der Verschiebung 2,82 (H-7 b) entsprach dem einen der zwei Protonen an der Epoxy-Gruppe. Das Integral bei dieser Verschiebung muss durch das korrigierte Integral bei 0,65 (H-2) geteilt und mit 100 multipliziert werden.

Der erhaltene Wert entsprach der Anzahl der intakten Epoxy-Gruppen in mol -% im Silan bzw. dem Hydrolyseprodukt.

$^{29}$Si-NMR: (80 MHz, , $CDCl_3$) $\delta$ = [ppm] = -42 (Monomer), -49 bis -51(M-Struktur), -57 bis -61 (D-Struktur), -68 bis -71 (T-Struktur)

**GPC-Messungen:**

| | |
|---|---|
| Gerät: | Agilent 1100 Serie |
| Kalibration: | Dynasylan® 6490 |
| Säule 1: | Vorsäule MZ Gel SDplus linear 5 µm, 35 °C |
| Säule 2: | MZ Gel SDplus 50A 5 µm, 35 °C |
| Säule 3: | MZ Gel SDplus 100A 5 µm, 35 °C |
| Säule 4: | MZ Gel SDplus 50A 500 µm, 35 °C |
| Detektor: | Agilent RID G1362A, 35 °C |
| Eluent: | Methylethylketon |
| Flusrate: | 1,000 mL/min |
| Injektionsvolumen: | 250 µm |
| Messintervall: | 1,000 sec |

**Gewichtsmittel des Molekulargewichts (Mw)**

$$M_w = \frac{\sum n_i M_i^2}{\sum n_i M_i}$$

und **Zahlenmittel des Molekulargewichts (Mn)**

$$M_n = \frac{\sum n_i M_i}{\sum n_i}$$

jeweils mit: $n_i$ = Stoffmenge [Masse] des i-mers, $M_i$ = Molmasse des i-mers. Details zur Definition für Gewichtsmittel und Zahlenmittel, die dem Fachmann an sich bekannt sind, kann der Leser aber auch u. a. dem Internet unter http://de.wikipedia.org/wiki/ Molmassenverteilung oder einem Standardwerk der Mathematik entnehmen.

**Bestimmung der Viskosität:**

Die Viskosität wurde bei 25 °C nach DIN 53019 bestimmt.

**Bestimmung der Farbzahl:**

Die Farbzahl wurde nach ISO 4630 und ISO 6271 bestimmt.

**Bestimmung des pH-Wertes:**

Der pH-Wert wurde nach DIN 38404-C5 bestimmt. Die zumessende Probe wurde 1:10 mit Wasser gemischt und der pH-Wert der wässrigen Phase gemessen.

**Anwendungstechnische Prüfungen**

**Bestimmung Gitterschnittwert:**

Der Gitterschnitt wurde nach DIN EN ISO 2409 bestimmt. Die Ermittlung des Gitterschnitt-Kennwertes erfolgte nach folgender Beurteilungsskala:

| Beschreibung | Kennwert |
|---|---|
| Die Schnittränder sind vollkommen glatt; keines der Quadrate des Gitters ist abgeplatzt. | 0 |
| An den Schnittpunkten der Gitterlinien sind kleine Splitter der Beschichtung abgeplatzt. Abgeplatzte Fläche nicht größer als 5 % der Gitterschnittfläche. | 1 |
| Die Beschichtung ist längs der Schnittränder und/oder an den Schnittpunkten der Gitterlinien abgeplatzt. Abgeplatzte Fläche größer als 5 %, aber nicht größer als 15 % der Gitterschnittfläche. | 2 |
| Die Beschichtung ist längs der Schnittränder teilweise oder ganz in breiten Streifen abgeplatzt, und/ oder einige Quadrate sind teilweise oder ganz abgeplatzt. Abgeplatzte Fläche größer als 15 %, aber nicht größer als 35 % der Gitterschnittfläche. | 3 |
| Die Beschichtung ist längs der Schnittränder in breiten Streifen abgeplatzt, und/oder einige Quadrate sind ganz oder teilweise abgeplatzt. Abgeplatzte Fläche größer als 35 %, aber nicht größer als 65 % der Gitterschnitt-fläche. | 4 |
| Jedes Abplatzen, das nicht mehr als Gitterschnitt- Kennwert 4 eingestuft werden kann. | 5 |

**Bestimmung des Glanzwertes:**

Der Glanzwert wurde nach DIN EN ISO 2813 bestimmt.

**Schichtdickenbestimmung der Beschichtungen:**

Die Schichtdicke der ausgehärteten Beschichtungen wurde mit einem Schichtdickenmessgerät Dualscope MP4C von Fischer mit der Messsonde EGAB 1.3 nach DIN 50984 und DIN 50981 durchgeführt.

**Schnellbewitterungstest (QUV-Test):**

Die Schnellbewitterung wird in Anlehnung an die Normen DIN EN ISO 11507 und DIN EN ISO 4892 durchgeführt.
Hierbei werden die zu prüfenden Systeme folgenden Bedingungen ausgesetzt:

1. 04 h 00 min Bestrahlungszyklus UVA-Lampen (UVA-340) bei 55°C
2. 03 h 55 min Kondensationszyklus bei 45°C
3. 00 h 05 min Wassersprühstrahl.

**Bestimmung der Auslaufzeit mit dem Auslaufbecher:**

Die Viskosität der Acryldispersionen wurde während der Lagerstabilität nach DIN ISO 2431 mit einem Auslaufbecher DIN 53211 mit einer 4 mm Lochöffnung bei Raumtemperatur (17-24 °C) gemessen.

**Einsatzstoffe/ Edukte:**

| **Chemikalien** | **Reinheit** | **Hersteller** |
|---|---|---|
| Dynasylan® GLYMO | | Evonik Industries |
| Dynasylan® PTMO | | Evonik Industries |
| Dynasylan® MTMS | | Evonik Industries |
| $NaHCO_3$ | rein | J.T. Baker |
| $Na_2CO_3$ | Ph. Eur. monographs | J.T. Baker |
| $HNO_3$ | 65% | Merck |
| HCl | 37% | Merck |
| KF | p.A. | Carl Roth |
| Kieselgel 6015 | wasserfrei | Evonik Industries |
| Ancarez 4010 | | Evonik Industries |
| Ancarez AR 555 | | Evonik Industries |
| Ancamine 2726 | | Evonik Industries |
| Ancamine 419 | | Evonik Industries |
| Epodil 748 | | Evonik Industries |
| Titandioxid 2310 | > 92,5% | Kronos B.V. |
| Mica MKT | | Imerys |
| ZCP plus | | Heubach |
| PU-Lack ZD-37, himmelblau | | Dresdner Lackfabrik |
| PU-Härter ZH62 | | Dresdner Lackfabrik |
| Mowilith LDM 7719 | | Celanese Emulsions GmbH |
| Mowilith DM 7461 | | Celanese Emulsions GmbH |
| Mowilith 756A | | Celanese Emulsions GmbH |
| Tego Dispers 628 | | Evonik Industries |
| Tego Wet 270 | | Evonik Industries |
| Tego Dispers 653 | | Evonik Industries |
| Surfynol DF 110 CF | | Evonik Industries |
| Surfynol 420 | | Evonik Industries |
| Tafigel PUR 61 | | Münzing Chemie GmbH |
| Schwego Flour 6523 | | Schwegmann |

**Durchführung der Vergleichsbeispiele 1 bis 6 und der erfindungsgemäße Beispiele 1 bis 6:**

In einer Rührapparatur mit Rückflusskühler wurden unter Stickstoffatmosphäre die entsprechenden Mengen an Silan I sowie Silan II, wie in Tabelle 1 angegeben, vorgelegt. Über eine Dosiereinrichtung wurde ein Gemisch aus der entsprechenden Menge Wasser, Methanol und Katalysator, wie in Tabelle 1 beschrieben, dosiert. Die Reaktion wurde bei entsprechender Reaktionstemperatur und Reaktionsdauer, wie in Tabelle angegeben, durchgeführt. Nach Ende der Reaktionszeit wurde die Reaktionsmischung um 5 bis 10 °C abgekühlt und bzgl. der erfindungsgemäßen Beispiele eine definierte Menge an Säureäquivalent dosiert. Methanol wurde im Vakuum entfernt. Zur Vervollständigung der Reaktion wurde bei einer Sumpftemperatur > 100 °C und einem Druck < 10 mbar 1 h unter Rühren temperiert. Das so erhaltene Produkt wurde anschließend über einen Lackfilter (Nylon-Gewebe, 125 µm, Erich Drehkopf GmbH) filtriert.

**Tabelle mit Vergleichsbeispielen**

| Edukte / Parameter / Analysenmethode | [Masseinheit] | Vergleichsbeispiel 1 in Anlehnung an US 5650474 | Vergleichsbeispiel 2 in Anlehnung an US 5650474 | Vergleichsbeispiel 3 in Anlehnung an "comparative Example 7" aus US 5650474 | Vergleichsbeispiel 4 in Anlehnung an "Example 1" aus CN 106674521 |
|---|---|---|---|---|---|
| **GLYMO (Silan I)** | g | 236,2 | 472,0 | 472,2 | 472,2 |
| **Silan II** | g | - | - | - | - |
| **Wasser** | g | 14,4 | 43,5 | 36,0 | 42,2 |
| **Methanol** | g | 195,6 | 69,9 | 200,0 | 55,5 |
| **Katalysator** | | KF | KF | HCl | NaCl |
| **Katalysator** | g | 0,58 | 0,3 | 0,08 | 0,016 |
| **Temperatur** | °C | 75 | 50 | 30 | 70 |
| **Reaktionszeit** | min | 120 | 120 | 60 | 390 |
| **pH nach der Umsetzung** | | | 6,4 | 4,3 | 4,8 |
| **pH Wert im Produkt** | | | 6,4 | 4,6 | 6,2 |
| **$^{29}$Si-NMR: Monomer** | Mol-% | 6,9 | 1,8 | 16,0 | 4,8 |
| **$^{1}$H-NMR: intaktes Epoxy** | Mol-% | 100 | 100 | 100 | 100 |
| **Mn** | g/mol | 854 | | 702 | |
| **Mw** | g/mol | 1462 | | 1704 | |
| **Farbzahl** | mg Pt-Co/l | 230 dunkelgelb | 425 braun | < 5 farblos | 430 orange |

**Fortsetzung der Tabelle mit Vergleichsbeispielen**

| Edukte / Parameter / Analysenmethode | [Masseinheit] | Vergleichsbeispiel 5 in Anlehnung an "Example 2" aus CN 106674521 | Vergleichsbeispiel 6 in Anlehnung "ESO Example 3" aus EP 1896522 |
|---|---|---|---|
| **GLYMO (Silan I)** | g | 472,2 | 650,0 |
| **Silan II** | g | - | - |
| **Wasser** | g | 27,0 | 47,5 |
| **Methanol** | g | (Butanol) 47,0 | (Aceton) 114,3 |
| **Katalysator** | | $Na_2CO_3$ | Amberlist |
| **Katalysator** | g | 0,054 | 21,1 |
| **Temperatur** | °C | 40-50 | 120 °C |
| **Reaktionszeit** | min | 1 h (Destillation bei 90 °C) | 2h (Destillation bei 80 °C und 200 mbar) |
| **pH nach der Umsetzung** | | - | |
| **pH Wert im Produkt** | | 7,8 | 6,6 |
| **$^{29}$Si-NMR: Monomer** | Mol-% | 28 | 12,0 |
| **$^{1}$H-NMR: intaktes Epoxy** | Mol-% | 98 | 96 |
| **Mn** | g/mol | 236 | 480 |
| **Mw** | g/mol | 607 | 746 |
| **Farbzahl** | mg Pt-Co/l | 120 gelb | 125 gelb |

**Tabelle mit erfindungsgemäßen Beispielen:**

| Edukte / Parameter / Analysenmethode | [Masseinheit] | Beispiel 1 | Beispiel 2 | Beispiel 3 | Beispiel 4 | Beispiel 5 | Beispiel 6 |
|---|---|---|---|---|---|---|---|
| **GLYMO (Silan I)** | g | 6607,6 | 6609,3 | 6606,9 | 6635,0 | 472,0 | 472,2 |
| **Silan II** | g | - | - | - | - | 164,1 (PTMO) | 136,0 (MTMS) |
| **Wasser** | g | 604,9 | 604,9 | 655,7 | 655,0 | 64,1 | 64,1 |
| **Methanol** | g | 350,4 | 350,1 | 350,6 | 350,8 | 90,0 | 90,0 |
| **Katalysator** | | $NaHCO_3$ | $NaHCO_3$ | $NaHCO_3$ | $NaHCO_3$ | $NaHCO_3$ | $NaHCO_3$ |
| **Katalysator** | g | 1,0 | 0,7 | 1,0 | 1,0 | 0,07 | 0,07 |
| **Temperatur** | °C | 70 | 70 | 70 | 70 | 70 | 70 |
| **Reaktionszeit** | min | 120 | 120 | 180 | 180 | 120 | 420 |
| **pH nach der Umsetzung** | | 7,2 | 7,1 | 7,2 | 7,2 | 7,4 | 7,5 |
| **Zusatz an Säureäquivalent** | eq | 0,22 | 0,22 | 0,22 | 0,22 | 0,16 | 0,16 |
| **pH im Produkt** | | 5,4 | 5,8 | 5,8 | 5,8 | 6,0 | 5,3 |

(fortgesetzt)

| Edukte / Parameter / Analysenmethode | [Masseinheit] | Beispiel 1 | Beispiel 2 | Beispiel 3 | Beispiel 4 | Beispiel 5 | Beispiel 6 |
|---|---|---|---|---|---|---|---|
| **$^{29}$Si-NMR: Monomer** | Mol-% | 1,7 | 2,1 | 0,2 | 0,7 | 3,7 | 1,4 |
| **$^{1}$H-NMR: intaktes Epoxy** | Mol-% | 97 | 95 | 100 | 100 | 100 | 97 |
| **Mn** | g/mol | 1083 | 1018 | 1086 | 1117 | 1199 | 1341 |
| **Mw** | g/mol | 1671 | 1694 | 1778 | 1748 | 1927 | 2468 |
| **Farbzahl** | mg Pt-Co/l | < 5 farblos | < 5 farblos | < 5 farblos | < 5 farblos | 20 farblos | < 5 farblos |
| **Viskosität** | mPa·s | 1060 | 770 | 1570 | 1400 | 857 | 1420 |

**Versuche zur Lagerstabilität - Lagerbedingung bei 60 °C**

Die Lagerstabilität ist ein wichtiges Kriterium für ein Produkt. Gerade Epoxysilane und Silanoligomere können durch Luftfeuchtigkeit (Wasser) hydrolysieren und kondensieren. Dadurch findet ein Molekulargewichtsaufbau statt und die Viskosität steigt. Neben der Silangruppe kann aber auch die Epoxygruppe bei Anwesenheit von Säuren, Laugen oder anderen katalytisch wirkenden Substanzen durch Feuchtigkeit oder durch bei der Hydrolyse freigesetztem Methanol geöffnet werden. Durch die Ringöffnung entstehen Alkohole, die dann wieder mit dem Silan reagieren können und so zu einer Vernetzung führen. Die Viskosität steigt. In ungünstigen Fällen kann es sogar zu einer Gelierung kommen. Das freigesetzte Methanol stellt nicht nur ein Problem für die Stabilität dar, sondern verändert auch die toxikologische Kennzeichnung des Produkts aufgrund eines höheren Methanolgehalts und veränderter den Flammpunkt des Produkts, was dann die Produktsicherheit betrifft. Es ist deshalb wichtig, dass oligomere Epoxisilane bei Lagerung stabil sind, vgl. die Zusammenstellung von Lagerversuchen in der nachfolgenden Tabelle:

| Silan-Zusammensetzung | Lagerung bei 60 °C | Aussehen | Mw [g/mol] | intaktes Epoxy in Mol-% | MeOH Gew.-% | Farbzahl [mg Pt-Co/l] |
|---|---|---|---|---|---|---|
| aus Vergleichsbeispiel 6 | Erstmessung | gelb | 746 | 98 | 0,2 | 125 |
| | 1 Woche | braun | 877 | 98 | 0,5 | 890 |
| | 2 Wochen | braun | 940 | 98 | 0,6 | > 800 |
| | 4 Wochen | braun | 918 | 96 | 0,6 | 6,9 Gardner |
| | 8 Wochen | braun | 1030 | 93 | 0,6 | 8,5 Gardner |
| aus Vergleichsbeispiel 5 | Erstmessung | gelb | 607 | 98 | 0,1 | 120 |
| | 1 Woche | braun | 650 | 98 | 0,2 | 400 |
| | | | | | | |
| | | | | | | |
| | | | | | | |
| aus erfindungsgemäßem Beispiel 1 | Erstmessung | farblos | 1671 | 100 | 0,1 | < 5 |
| | 1 Woche | farblos | 1668 | 100 | 0,1 | < 5 |
| | 2 Wochen | farblos | 1693 | 100 | 0,1 | < 5 |
| | 4 Wochen | farblos | 1670 | 100 | 0,1 | < 5 |
| | 8 Wochen | farblos | 1661 | 100 | 0,1 | < 5 |

(fortgesetzt)

| Silan-Zusammensetzung | Lagerung bei 60 °C | Aussehen | Mw [g/mol] | intaktes Epoxy in Mol-% | MeOH Gew.-% | Farbzahl [mg Pt-Co/l] |
|---|---|---|---|---|---|---|
| aus erfindungsgemäßem Beispiel 2 | Erstmessung | farblos | 1694 | 100 | 0,1 | < 5 |
| | 1 Woche | farblos | 1746 | 100 | 0,1 | < 5 |
| | 2 Wochen | farblos | 1738 | 100 | 0,1 | < 5 |
| | 4 Wochen | farblos | 1730 | 100 | 0,1 | < 5 |
| | 8 Wochen | farblos | 1651 | 100 | 0,1 | < 5 |

Wie der vorhergehenden Tabelle entnommen werden kann, sind Vergleichsbeispiel 6 ("ESO Beispiel 3" aus EP1896522) und Vergleichsbeispiel 5 (bzgl. CN106674521) von Anfang etwas gelb verfärbt. Durch die Lagerung nimmt diese Verfärbung zu. Für einige farbsensible Anwendung sind solche Produkte nicht einsetzbar. Dagegen sind die erfindungsgemäßen Beispiele schon bei der Erstmessung, d.h. direkt nach der Synthese, farblos und verändern sich während der Lagerung auch bei 60 °C über die Lagerungsdauer nicht. Somit können erfindungsgemäße Produkte auch in farbsensiblen Bereichen vorteilhaft eingesetzt werden.

**Anwendungstechnische Untersuchungen einer Zusammensetzung bestehend aus einem 2K-Epoxylack und erfindungsgemäßer Zusammensetzungen aus den Beispielen 1 und 6**

**Haftung eines lösemittelhaltigen 2K-Epoxylacks auf Glas:**

Lacksystem:

| Komponente A | Anteil in % |
|---|---|
| Ancarez 4010 (flüssiges DGEBA, EEW=190) | 57,8 |
| Epodil 748 | 20,5 |
| Titandioxid 2310 | 19,24 |
| Tego Dispers 628 | 1,95 |
| Tego Wet 270 | 0,51 |

| Komponente B | Anteil in % |
|---|---|
| Ancamine 2726 (H-aktiv EQ = 115) | 100 |

| | Komponente A | Komponente B |
|---|---|---|
| Mischungsverhältnis | 70 | 30 |
| EQ Epoxid:Amin | 1 | 1,2 |

Formulierung: Der Lack wurde aus Komponente A und B formuliert (0-Probe), in Portionen aufgeteilt und anschließend wurden jeweils 5 Gew.-% Zusammensetzung [auch Silan-Komponente genannt] aus dem erfindungsgemäßem Beispiel 1, aus dem erfindungsgemäßem Beispiel 6 sowie als Vergleichsprobe monomeres GLYMO unter Rühren zugegeben. Anschließend wurden die jeweiligen Formulierungen auf den Glasprüfkörpern appliziert.

Nassschichtdicke: 100 μm)
Härtung: 7 Tage Raumtemperatur (17 - 22 °C)
Prüfkörper: Glas, Rocholl GmbH

Reinigung der Prüfkörper: Ridoline C72, 10 g/L, 4 Min 62 °C
Kochtest: Die Prüfkörper wurden 2h in kochendes Wasser (100 °C) gestellt. Nach dem Kochtest wurden die Prüfkörper eine Stunde abgekühlt und der Gitterschnitt-Kennwert ermittelt.

Ergebnis:

| **Epoxylack mit Zusatz an Silankomponente** | Gitterschnitt nach 2h Kochtest |
|---|---|
| 0-Probe | 5 |
| 5 Gew.-% GLYMO | 5 |
| 5 Gew.-% aus Beispiel 1 | 1 |
| 5 Gew.-% aus Beispiel 6 | 2 |

Die Proben mit Zusatz an s.g. Silankomponente aus den erfindungsgemäßen Beispielen 1 und 6 zeigen nach dem Kochwassertest eine wesentlich bessere Haftung im Vergleich gegenüber der 0-Probe. Ferner zeigt auch die Formulierung, die das monomere Silan GLYMO enthält, keine Möglichkeit zur Verbesserung der Haftung.

**Haftung eines wässrigen 2K-EP-Lackes auf Stahl:**

Lacksystem:

| **Komponente A** | **Anteil in %** |
|---|---|
| Wasser | 17,1 |
| Tego Dispers 653 | 0,5 |
| Surfynol DF 110 CF | 1,7 |
| Surfynol 420 | 0,7 |
| Heubach ZCP plus | 4,6 |
| Titandioxid 2310 | 17,4 |
| Mica MKT | 3,9 |
| Ancarez AR 555 | 52,9 |
| Tafigel PUR 61 | 1,2 |

| **Komponente B** | **Anteil in %** |
|---|---|
| Ancamine 419 | 64,0 |
| 1-Methoxy-2-propanol | 18,5 |
| DI-Water | 17,5 |

| | **Komponente A** | **Komponente B** |
|---|---|---|
| Mischungsverhältnis | 80 | 20 |

Formulierung: Der Epoxylack wurde aus Komponente A und B formuliert (0-Probe), in Portionen aufgeteilt und anschließend wurden jeweils 5 Gew.-% Zusammensetzung [auch Silan-Komponente genannt] aus dem erfindungsgemäßem Beispiel 3 sowie als Vergleichsprobe monomeres GLYMO unter Rühren zugegeben. Anschließend wurden die jeweiligen Formulierungen auf den Stahlprüfkörpern appliziert.

Nassschichtdicke: 100 μm)

Härtung: 7 Tage Raumtemperatur (17 - 22 °C)
Prüfkörper: Stahl R-36, Rocholl GmbH
Reinigung der Prüfkörper: Ridoline C72, 10 g/L, 4 Min 62 °C
Kochtest: Die Prüfkörper wurden 2h in kochendes Wasser (100 °C) gestellt. Nach dem Kochtest wurden die Prüfkörper eine Stunde abgekühlt und der Gitterschnitt-Kennwert ermittelt.

Ergebnis:

| **Epoxylack mit Zusatz an Silan komponente** | Gitterschnitt nach 2h Kochtest |
|---|---|
| 0-Probe | 5 |
| 5 Gew.-% GLYMO | 2-3 |
| 5 Gew.-% Zusammensetzung aus dem erfindungsgemäßem Beispiel 3 | 1-2 |

Die Probe mit Zusatz an s.g. Silankomponente aus dem erfindungsgemäßen Beispiele 3 zeigt nach dem Kochwassertest eine wesentlich bessere Haftung im Vergleich zur Formulierung ohne Silanzusatz (0-Probe). Auch der Zusatz des monomeren Silans GLYMO zeigt eine schlechtere Haftung im Vergleich zur erfindungsgemäßen Zusammensetzung.

**Haftung eines lösemittelhaltigen 2K-PU-Lackes auf Aluminium:**

Lacksystem: lösemittelhaltige PU-Lack von Novatic Dresdner Lackfabrik ZD-37, himmelblau mit dem Härter ZH62

Zur fertigen Formulierung (0-Probe) wurden einerseits 3,0 Gew.-% GLYMO sowie jeweils erfindungsgemäße Zusammensetzung aus Beispiel 1, 5 sowie 6 unter Rühren zugegeben. Anschließend wurde die jeweilige Lackformulierung mit einem Applikator auf dem gereinigten Aluminium-Substrat aufgetragen.

Nassschichtdicke: 120 μm)
Härtung: 14 Tage Raumtemperatur (17 - 22 °C)
Prüfkörper: Aluminium 5005, Rocholl GmbH

Chemikalien und Reinigung der Prüfkörper:

Bonderite P3-aAA1568eco 152V, 1 Min 50 °C, 17,5 g/L und Eskaphor AB 7010 4-6% + 0,1 bis 0,5% Eskaphor EM 101, 5 Min 40 °C
Kochtest: Die Prüfkörper wurden 2h in kochendes Wasser (100 °C) gestellt. Nach dem Kochtest wurden die Prüfkörper eine Stunde abgekühlt und der Gitterschnitt-Kennwert ermittelt.

Ergebnis:

| **PU-Lack mit Zusatz an Silan komponente** | Gitterschnitt nach 2h Kochtest |
|---|---|
| 0-Probe | Gt3 |
| 3 Gew.-% GLYMO | Gt5 |
| 3 Gew.-% aus Beispiel 1 | Gt0 |
| 3 Gew.-% aus Beispiel 5 | Gt0 |
| 3 Gew.-% aus Beispiel 6 | Gt0 |

Die Formulierungen mit den erfindungsgemäßen Zusammensetzungen aus den Beispielen 1, 5 und 6 zeigen nach dem Kochwassertest eine wesentlich bessere Haftung im Vergleich zur Formulierung ohne Silanzusatz (0-Probe). Auch der Zusatz des monomeren Silans GLYMO zeigt eine schlechte Haftung im Vergleich zu den erfindungsgemäßen Zusammensetzungen.

**UV-Stabilität von pigmentierten Epoxylacken:**

Die UV-Stabilität von Lacksystemen ist vor allem bei Außenanwendungen sehr wichtig. Deshalb wurde ein pigmentierter 2K-Epoxylack mit der erfindungsgemäßen Zusammensetzung aus Beispiel 1 als Additiv geprüft und mit dem Monomer GLYMO sowie der Zusammensetzung aus dem Vergleichsbeispiel 6 ("ESO Beispiel 3" aus EP1896522) verglichen. Die UV-Stabilität wird unter anderem durch den Restglanz (nach QUV Test, bei 85°C) einer Beschichtung gemessen bzw. bestimmt.

Lacksystem:

| Komponente A | Anteil % |
|---|---|
| Ancarez 4010 | 62,2 |
| Epodil 748 | 13,8 |
| $TiO_2$ (Kronos 2310) | 20,7 |
| Tego Dispers 670 | 2,6 |
| Tego Wet 240 | 0,6 |

| Komponente B | Anteil % |
|---|---|
| Ancamine 2280 | 100 |

| | Komponente A | Komponente B |
|---|---|---|
| Mischungsverhältnis | 100 | 42 |

Die Komponenten A und B wurden im angegebenen Verhältnis gemischt (0-Probe). Zu Proben der fertigen Formulierung wurden jeweils 10,0 Gew.-% GLYMO sowie die erfindungsgemäße Zusammensetzung aus Beispiel 1 sowie die Zusammensetzung aus Vergleichsbeispiel 6 ("ESO Beispiel 3" aus EP18965229) unter Rühren zugegeben. Anschließend wurde die Lackformulierung mit einem Applikator auf dem gereinigten Aluminiumsubstrat aufgetragen.

Nassschichtdicke: 60 μm)
Härtung: 80 °C 30 Minuten + 7 Tage Raumtemperatur
Prüfkörper: Aluminium 5005, Rocholl GmbH
Reinigung der Prüfkörper: Eskaphor AB 7010, 5% in Wasser + Eskaphor EM 101, 0,3% in Wasser, 2 Minuten bei 40 °C
Die gehärteten Prüfkörper wurden dem Schnellbewitterungstest unterzogen. Der Glanzwert wurde regelmäßig bestimmt.

Ergebnisse:

| Restglanz in % nach QUV Test, 85° pigmentierter Epoxylack | | | | | | |
|---|---|---|---|---|---|---|
| | 150h | 300h | 450h | 600h | 750h | 900h |
| 0-Probe | 98 | 79 | 33 | 24 | 24 | 24 |
| 10 Gew.-% GLYMO | 99 | 71 | 34 | 22 | 24 | 22 |
| 10 Gew.-% Zusammensetzung aus dem erfindungsgemäßen Beispiel 1 | 101 | 98 | 84 | 80 | 75 | 77 |
| 10 Gew.-% Zusammensetzung aus dem Vergleichsbeispiel 6 | 98 | 92 | 70 | 61 | 56 | 54 |

Den Beispielen in der Tabelle kann entnommen werden, dass die Formulierung ohne den Zusatz an Silankomponente (0-Probe) sowie die Formulierung mit 10 Gew.-% GLYMO nach 450 Stunden Bewitterung im QUV-Test einen Restglanz von 33 bzw 34 % erreichen. Dagegen zeigen die Formulierungen mit 10 Gew.-% Zusatz der erfindungsgemäßen Zusammensetzung aus Beispiel 1 einen Restglanz von 84 % und die Formulierung mit 10 Gew.-% der Zusammensetzung aus Vergleichsbeispiel 6 ("ESO Beispiel 3" aus EP1896522) einen Restglanz von 70 %. Auch in diesem Beispiel konnte die erfindungsgemäße Formulierung mit der erfindungsgemäßen Zusammensetzung aus Beispiel 1 den höchsten Restglanz erzielen. Das bedeutet, dass die Formulierung mit der erfindungsgemäßen Verbindung aus Beispiel 1 die beste UV-Stabilität aufweist.

**Stabilität in Polymerdispersionen:**

Silane werden oft als Additive zu Lackformulierungen gegeben, um die Haftung, die Bewitterungsstabilität oder auch andere Eigenschaften zu verbessern. Dabei ist es außerordentlich wichtig, dass die Formulierungen mit dem Silan stabil sind.

In den folgenden Untersuchungen wurde die Stabilität der erfindungsgemäßen Oligomere aus Beispiel 1 in wässrigen Acrylatpolymerdisperionen geprüft und mit Monomerem GLYMO sowie einer Zusammensetzung aus Vergleichsbeispiel 6 vergleichen. Dazu wurde einer wässrigen Acrylatpolymerdisperion unter Rühren jeweils 3 Gew.-% des monomeren GLYMO, einer Zusammensetzung aus dem erfindungsgemäßen Beispiel 1 sowie das Oligomer aus dem Vergleichsbeispiel 6 ("ESO Beispiel 3" aus EP1896522) zugegeben. Die Viskosität der Formulierungen wurde über die Auslaufzeit mit dem Auslaufbecher gemessen. Anschließend wurden die formulierten Dispersionen bei Raumtemperatur (25 °C) gelagert. Die Viskosität der Formulierungen wurde in regelmäßigen Abständen gemessen. In der folgenden Tabelle sind die Ergebnisse zusammengestellt:

Ergebnis:

| | | initial | 14 Tage | 30 Tage | 60 Tage |
|---|---|---|---|---|---|
| **Mowilith LDM 7719** | 0-Probe | 57 | 57 | 57 | 57 |
| | 3 Gew.-% GLYMO | 39 | fest | fest | fest |
| | 3 Gew.-% Zusammensetzung aus erfindungs-gemäßem Beispiel 1 | 52 | 60 | 68 | 71 |
| | 3 Gew.-% Zusammensetzung aus Vergleichs-beispiel 6 | 50 | fest | fest | fest |
| **Mowilith DM 7416** | 0-Probe | 40 | 40 | 40 | 40 |
| | 3 Gew.-% GLYMO | 36 | fest | fest | fest |
| | 3 Gew.-% Zusammensetzung aus erfindungs-gemäßem Beispiel 1 | 43 | 40 | 42 | 41 |
| | 3 Gew.-% Zusammensetzung aus Vergleichs-beispiel 6 | 32 | fest | fest | fest |

Der Tabelle kann entnommen werden, dass sich die Viskosität der Polymerdispersionen (Mowolith LDM 7719 sowie Mowolith DM 7416) ohne Silan als Additiv nicht verändern. Dagegen sind die Formulierungen mit Mowolith LDM 7719 und 3 Gew.-% GLYMO bzw. dem Oligomer aus Vergleichsbeispiel 6 schon nach 14 Tagen fest. Die Formulierung mit der Zusammensetzung aus dem erfindungsgemäßen Beispiel 1 zeigt dagegen nur einen leichten Anstieg der Viskosität.

Formulierungen mit der Polymerdispersion Mowolith DM 7416 verhalten sich ähnlich. Die Polymerdispersion ohne Silan verändert die Viskosität nicht, wohingegen die Polymerdispersion Mowolith DM 7416 mit 3 Gew.-% GLYMO bzw. dem Oligomer aus Vergleichsbeispiel 6 schon nach 14 Tagen fest wird. Die Formulierung mit dem erfindungsgemäßen Oligomer aus Beispiel 1 zeigt auch nach 60 Tagen keine Veränderung der Viskosität. Somit konnte damit gezeigt werden, dass die erfindungsgemäßen Oligomere aus Beispiel 1 sehr stabil in Polymerdispersionen sind und sich deshalb auch besonders vorteilhaft als Additiv für Polymerdispersionen eignen.

**Patentansprüche**

1. Zusammensetzung, die ein Gemisch aus 3-Glycidyloxypropylalkoxysilanoligomeren mit einem Anteil von ≥ 60 Gew.%, bezogen auf die Zusammensetzung, umfasst, die lagerstabil über mindestens 8 Wochen bei 60 °C Lagertemperatur ist, eine Farbzahl von ≤ 20 mg Pt-Co/l, gemessen nach ISO 4630 und ISO 6271, einen pH von größer gleich 3,5 bis kleiner gleich 6,5, gemessen nach DIN 38404-C5, und einen Monomeranteil an bei der Herstellung der Zusammensetzung eingesetztem Silan von kleiner gleich 5 Mol-%, bezogen auf den molaren Anteil an Si in der

Zusammen-setzung, aufweist, wobei der Anteil an Epoxy-Gruppen, die in Si-Verbindungen gebunden sind und in der Zusammensetzung vorliegen, größer gleich 95 Mol-%, bezogen auf den molaren Anteil an Si in der Zusammensetzung, beträgt.

**2.** Zusammensetzung nach Anspruch 1, wobei die Zusammensetzung ein Gemisch aus Glycidyloxypropylmethoxysilanoligomeren umfasst.

**3.** Zusammensetzung nach Anspruch 1 oder 2,
die eine Viskosität von 600 bis 2000 mPa·s, gemessen nach DIN 53019, einen Gehalt an Methanol von weniger als 0,5 Gew.-%, vorzugsweise kleiner gleich 0,3 Gew.-%, bezogen auf die Zusammensetzung, ein Molekulargewicht (Mn), gemessen per GPC wie in der Beschreibung erläutert, von 600 bis 2000 g/mol aufweist und frei von organischen Lösemittel ist, ausgenommen Methanol.

**4.** Zusammensetzung nach einem der Ansprüche 1 bis 3,
wobei die Zusammensetzung einen Anteil an 3-Glycidyloxypropylalkoxysilan-oligomeren bzw. 3-Glycidyloxypropylmethoxysilanoligomeren [d.h. Wirkstoffanteil] von ≥ 90 bis 99.9 Gew.-%, insbesondere ≥ 95 bis ≤ 99,7 Gew.-%, bezogen auf die Summe aller Komponenten in der Zusammensetzung, enthält.

**5.** Zusammensetzung nach einem der Ansprüche 1 bis 4,
mit einem Gehalt eines Zusatzes zur Verbesserung der Mischbarkeit bzw. Löslichkeit mit Wasser von < 40 Gew.%, vorzugsweise > 0,1 bis ≤ 39,5 Gew.-%, bezogen auf alle Komponenten in der Zusammensetzung, wobei man bevorzugt Polyethylenglycolmonomethylether oder Propylenglykolmonomethylether verwendet.

**6.** Verfahren zur Herstellung einer Zusammensetzung nach einem der Ansprüche 1 bis 5, indem man

- in Schritt 1 3-Glycidyloxypropyltrimethoxysilan oder ein Gemisch aus 3-Glycidyloxypropyltrimethoxysilan und einem C1-bis C8-Alkyltrimethoxysilan einsetzt und in Gegenwart von Natriumhydrogencarbonat mit einer definierten Menge Wasser zusammenbringt und mischt, wobei man optional Methanol als Verdünnungsmittel zusetzen kann,
- in Schritt 2 das Reaktionsgemisch aufheizt und bei 55 bis 90 °C über 1,5 bis 5 Stunden und unter Durchmischung reagieren lässt, anschließend senkt man die Temperatur um 5 bis 10°C ab und stellt den pH Wert unter Zusatz einer definierten Menge an Säureäquivalente, vorzugsweise durch Zusatz eines festen aciden Ionenaustauschers, auf größer gleich 3,5 bis kleiner gleich 6,5, vorzugsweise auf größer gleich 4 bis kleiner gleich 6, insbesondere größer gleich 4,5 und kleiner gleich 6, ein,
- nachfolgend führt man in Schritt 3 eine destillative Ausarbeitung des Produktgemischs aus Schritt 2 unter vermindertem Druck durch, lässt optional das Sumpfprodukt nach Abtrennung des freien Methanols unter Durchmischung bei 100 bis 150°C und einem Druck von ≤ 10 mbar über 0,5 bis 1,5 Stunden nachreagieren, anschließend wird das so im Sumpf der Destillationseinheit erhaltene Produkt filtriert.

**7.** Verfahren nach Anspruch 6,
dass man in Schritt 1 eingesetztes Methoxysilan und Wasser in einem molaren Verhältnis von 1 zu 0,8 bis 1,3, bevorzugt von 1 zu 0,9 bis 1,25, besonders bevorzugt von 1 zu 1,0 bis 1,2 einsetzt.

**8.** Verfahren nach Anspruch 6 oder 7,
dass man in Schritt 1 als Katalysator Natriumhydrogencarbonat in einem molaren Verhältnis zu eingesetztem Methoxysilan oder Ethoxysilan von 0,0001 bis 0,06 zu 1, bevorzugt 0,0002 bis 0,03 zu 1, besonders bevorzugt 0,0003 bis 0,01 zu 1, insbesondere 0,0004 bis 0,008 zu 1 einsetzt.

**9.** Verfahren nach einem der Ansprüche 6 bis 8,
wobei man neben dem 3-Glycidyloxypropyltrimethoxysilan ein Methoxysilan aus der Reihe Methyltrimethoxysilan oder Propyltrimethoxysilan einsetzt.

**10.** Wässrige Zusammensetzung erhältlich nach einem der Ansprüche 6 bis 9.

**11.** Verwendung einer Zusammensetzung nach einem der Ansprüche 1 bis 5, hergestellt nach einem der Ansprüche 6 bis 9 oder erhältlich nach Anspruch 10 als Komponente in Epoxyharzformulierungen, als Kopplungsreagenz in Primerlösungen, als Versiegler auf anorganischen Substraten bzw. Substratoberflächen, als reaktives Bindemittel, als Co-Bindemittel, als Additiv in Polymerdispersionen sowie als Additiv in PU-Lacken.

**Claims**

1. Composition comprising a mixture of 3-glycidyloxypropylalkoxysilane oligomers in a proportion of > 60% by weight based on the composition, which is storage stable over at least 8 weeks at a storage temperature of 60°C, has a colour number of < 20 mg Pt-Co/l measured according to ISO 4630 and ISO 6271, a pH of not less than 3.5 to not more than 6.5 measured according to DIN 38404-C5 and a monomer proportion of silane employed in the production of the composition of not more than 5 mol% based on the molar proportion of Si in the composition, wherein the proportion of epoxy groups bound in Si compounds and present in the composition is not less than 95 mol% based on the molar proportion of Si in the composition.

2. Composition according to Claim 1, wherein the composition comprises a mixture of glycidyloxypropylmethoxysilane oligomers.

3. Composition according to Claim 1 or 2, which has a viscosity of 600 to 2000 mPa·s measured according to DIN 53019, a content of methanol of less than 0.5% by weight, preferably not more than 0.3% by weight, based on the composition, a molecular weight (Mn) measured by GPC as elucidated in the description of 600 to 2000 g/mol and is free from organic solvent with the exception of methanol.

4. Composition according to any of Claims 1 to 3, wherein the composition contains a proportion of 3-glycidyloxypropylalkoxysilane oligomers or 3-glycidyloxypropylmethoxysilane oligomers [i.e. active substance proportion] of > 90% to 99.9% by weight, in particular > 95% to < 99.7% by weight, based on the sum of all components in the composition.

5. Composition according to any of Claims 1 to 4, having a content of an additive for improving miscibility/solubility with water of < 40% by weight, preferably > 0.1% to < 39.5% by weight, based on all components in the composition, wherein preference is given to using polyethylene glycol monomethyl ether or propylene glycol monomethyl ether.

6. Process for producing a composition according to any of Claims 1 to 5, wherein

   - in step 1 3-glycidyloxypropyltrimethoxysilane or a mixture of 3-glycidyloxypropyltrimethoxysilane and a C1-to C8-alkyl trimethoxysilane is employed and in the presence of sodium hydrogencarbonate combined with a defined amount of water and mixed, wherein methanol may optionally be added as a diluent,
   - in step 2 the reaction mixture is heated and reacted at 55°C to 90°C over 1.5 to 5 hours with mixing, the temperature is subsequently reduced by 5°C to 10°C and by addition of a defined amount of acid equivalent, preferably by addition of a solid, acidic ion exchanger, the pH is adjusted to a value of from not less than 3.5 to not more than 6.5, preferably from not less than 4 to not more than 6, in particular not less than 4.5 and not more than 6,
   - subsequently in step 3 a distillative workup of the product mixture from step 2 is performed under reduced pressure, the bottoms product after removal of the free methanol is optionally reacted at 100°C to 150°C and a pressure of < 10 mbar over 0.5 to 1.5 hours with mixing and the product thus obtained in the bottom of the distillation unit is subsequently filtered.

7. Process according to Claim 6, in that methoxysilane and water employed in step 1 are employed in a molar ratio of 1:0.8 to 1.3, preferably of 1:0.9 to 1.25, particularly preferably of 1:1.0 to 1.2.

8. Process according to Claim 6 or 7, in that in step 1 sodium hydrogencarbonate is employed as catalyst in a molar ratio to employed methoxysilane or ethoxysilane of 0.0001 to 0.06:1, preferably 0.0002 to 0.03:1, particularly preferably 0.0003 to 0.01:1, in particular 0.0004 to 0.008:1.

9. Process according to any of Claims 6 to 8, wherein in addition to 3-glycidyloxypropyltrimethoxysilane a methoxysilane from the group of methyltrimethoxysilane or propyltrimethoxysilane is employed.

10. Aqueous composition obtainable according to any of Claims 6 to 9.

**11.** Use of a composition according to any of Claims 1 to 5, produced according to any of Claims 6 to 9 or obtainable according to Claim 10 as a component in epoxy resin formulations, as a coupling reagent in primer solutions, as a sealant on inorganic substrates/substrate surfaces, as a reactive binder, as a cobinder, as an additive in polymer dispersions and as an additive in PU lacquers.

**Revendications**

**1.** Composition qui comprend un mélange d'oligomères de 3-glycidyloxypropylalcoxysilane en une proportion ≥ 60% en poids, par rapport à la composition, qui est stable à l'entreposage pendant au moins 8 semaines à une température d'entreposage de 60°C, qui présente un indice de couleur ≤ 20 mg de Pt-Co/l, mesuré selon les normes ISO 4630 et ISO 6271, un pH supérieur ou égal à 3,5 à inférieur ou égal à 6,5, mesuré selon la norme DIN 38404-05, et une proportion de monomères de silane utilisé lors de la préparation de la composition inférieure ou égale à 5% en mole, par rapport à la proportion molaire de Si dans la composition, la proportion de groupes époxy, qui sont liés dans les composés de Si et qui se trouvent dans la composition, étant supérieure ou égale à 95% en mole, par rapport à la proportion molaire de Si dans la composition.

**2.** Composition selon la revendication 1, la composition comprenant un mélange d'oligomères de glycidyloxypropylméthoxysilane.

**3.** Composition selon la revendication 1 ou 2, qui présente une viscosité de 600 à 2000 mPa·s, mesurée selon la norme DIN 53019, une teneur en méthanol inférieure à 0,5% en poids, de préférence inférieure ou égale à 0,3% en poids, par rapport à la composition, un poids moléculaire (Mn), mesuré par CPG comme expliqué dans la description, de 600 à 2000 g/mole et qui est exempte de solvant organique, à l'exception du méthanol.

**4.** Composition selon l'une quelconque des revendications 1 à 3, la composition contenant une proportion d'oligomères de 3-glycidyloxypropylalcoxysilane ou d'oligomères de 3-glycidyloxypropylméthoxysilane [c'est-à-dire une proportion de substance active] de ≥ 90 à 99,9% en poids, en particulier de ≥ 95 à ≤ 99,7% en poids, par rapport à la somme de tous les composants dans la composition.

**5.** Composition selon l'une quelconque des revendications 1 à 4, présentant une teneur en un additif pour l'amélioration de la miscibilité avec l'eau ou de la solubilité dans l'eau de < 40% en poids, de préférence de > 0,1 à ≤ 39,5% en poids, par rapport à tous les composants dans la composition, où on utilise de préférence du polyéthylèneglycolmonométhyléther ou du propylèneglycolmonométhyléther.

**6.** Procédé pour la préparation d'une composition selon l'une quelconque des revendications 1 à 5, dans lequel

- dans l'étape 1, on utilise du 3-glycidyloxypropyltriméthoxysilane ou un mélange de 3-glycidyloxypropyltriméthoxysilane et d'un C1-C8-alkyltriméthoxysilane et on le rassemble et on le mélange en présence d'hydrogénocarbonate de sodium avec une quantité définie d'eau, du méthanol pouvant éventuellement être ajouté en tant que diluant,
- dans l'étape 2, on chauffe le mélange réactionnel et on le laisse réagir, à 55 jusqu'à 90°C pendant 1,5 à 5 heures et sous agitation, on abaisse ensuite la température de 5 à 10°C et on règle le pH, avec addition d'une quantité définie d'équivalents d'acide, de préférence par addition d'un échangeur d'ions acide solide, à 3,5 ou plus jusqu'à 6,5 ou moins, de préférence à 4 ou plus jusqu'à 6 ou moins, en particulier à 4,5 ou plus jusqu'à 6 ou moins,
- ensuite, dans l'étape 3, on réalise un traitement par distillation du mélange de produits de l'étape 2 sous pression réduite, on laisse éventuellement post-réagir le produit du fond après la séparation du méthanol libre, sous agitation à 100 jusqu'à 150°C et à une pression ≤ 10 mbars pendant 0,5 à 1,5 heure et le produit ainsi obtenu dans le fond de l'unité de distillation est ensuite filtré.

**7.** Procédé selon la revendication 6, en ce qu'on utilise le méthoxysilane et l'eau utilisés dans l'étape 1 dans un rapport molaire de 1:0,8-1,3, de préférence de 1:0,9-1,25, de manière particulièrement préférée de 1:1,0-1,2.

**8.** Procédé selon la revendication 6 ou 7, en ce qu'on utilise, dans l'étape 1, comme catalyseur, de l'hydrogénocarbonate de sodium dans un rapport molaire par rapport au méthoxysilane ou à l'éthoxysilane utilisé, de 0,0001-0,06:1, de préférence de 0,0002-0,03:1, de manière particulièrement préférée de 0,0003-0,01:1, en particulier de 0,0004-0,008:1.

**9.** Procédé selon l'une quelconque des revendications 6 à 8, où on utilise, outre le 3-glycidyloxypropyltriméthoxysilane, un méthoxysilane de la série méthyltriméthoxysilane ou propyltriméthoxysilane.

**10.** Composition aqueuse pouvant être obtenue selon l'une quelconque des revendications 6 à 9.

**11.** Utilisation d'une composition selon l'une quelconque des revendications 1 à 5, préparée selon l'une quelconque des revendications 6 à 9 ou pouvant être obtenue selon la revendication 10 comme composant dans des formulations d'époxy, comme réactif de couplage dans des solutions d'apprêt, comme agent de scellage sur des substrats ou des surfaces de substrats inorganiques, comme liant réactif, comme co-liant, comme additif dans des dispersions polymères ainsi que comme additif dans des laques de PU.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5650474 A
- EP 3235845 A
- CN 106674521
- EP 2794788 A
- US 6008285 A
- US 6391999 B
- US 20040234789 A
- EP 2428530 A
- EP 1971658 A
- EP 1896522 A
- DE 102007040246
- EP 18965229 A


### In der Beschreibung aufgeführte Nicht-Patentliteratur


- *Contemporary Topics in Polymer Science,* 1984, vol. 4, 107